# EUROPEAN PATENT APPLICATION

(11) **EP 4 836 470 A1**
(43) Date of publication of application: **04.11.2026**
(21) Application number: 23962830.8
(22) Date of filing: 29.12.2023
(51) Int. Cl.: H04W 12/03

(54) **COMMUNICATION METHODS, AND DEVICES**

(71) Applicant: GUANGDONG OPPO MOBILE TELECOMMUNICATIONS CORP., LTD., Dongguan, Guangdong 523860 (CN)
(72) Inventor: GAN, Lu, Dongguan, Guangdong 523860 (CN); WANG, Huiming, Dongguan, Guangdong 523860 (CN); HUANG, Cuihe, Dongguan, Guangdong 523860 (CN); LI, Meng, Dongguan, Guangdong 523860 (CN); XU, Jing, Dongguan, Guangdong 523860 (CN); LUO, Chaoming, Dongguan, Guangdong 523860 (CN)
(74) Representative: RGTH
(86) International application number: PCT/CN2023/143390
(87) International publication number: WO 2025/138156

(57) **Abstract**

The present application relates to communication methods, and devices. A method comprises: receiving an echo signal of a downlink sensing signal, wherein the downlink sensing signal is calculated on the basis of a plurality of bits extracted from one or more sensing sequences by one or more starting flag bits, and the one or more starting flag bits is calculated on the basis of a shared key of a terminal and an access network device.

## Description

### TECHNICAL FIELD

The present disclosure relates to the communication field, and more particularly, to a communication method and a device.

### BACKGROUND

In related technologies, the 3GPP technology has initiated a research on sensing-integrated communication services, and a sensing service provided by this sensing and communication-integrated scenario may achieve the purpose of tracking and potentially identifying any target (sensing target) in an environment, by sending a sensing signal from a terminal and/or a base station, and measuring an echo signal of the sensing signal by a terminal for sensing and/or an access network device for sensing. However, in the above sensing scenario, how to ensure the security of the sensing signal itself, thereby ensuring the security of the entire sensing scenario, has become an issue that needs to be resolved.

### SUMMARY

The embodiments of the present disclosure provide a communication method and a device.

The embodiments of the present disclosure provide a communication method performed by a terminal, and including:
receiving an echo signal of a downlink sensing signal, where the downlink sensing signal is calculated based on a plurality of bits extracted from one or more sensing sequences based on one or more starting flag bits, and the one or more starting flag bits are calculated based on a shared key of the terminal and an access network device.

The embodiments of the present disclosure provide a communication method performed by an access network device, and including:
sending a downlink sensing signal, where the downlink sensing signal is calculated based on a plurality of bits extracted from one or more sensing sequences based on one or more starting flag bits, and the one or more starting flag bits are calculated based on a shared key of a terminal and the access network device.

The embodiments of the present disclosure provide a terminal, including:
a first communication unit, configured to receive an echo signal of a downlink sensing signal, where the downlink sensing signal is calculated based on a plurality of bits extracted from one or more sensing sequences based on one or more starting flag bits, and the one or more starting flag bits are calculated based on a shared key of the terminal and an access network device.

The embodiments of the present disclosure provide an access network device, including:
a second communication unit, configured to send a downlink sensing signal, where the downlink sensing signal is calculated based on a plurality of bits extracted from one or more sensing sequences based on one or more starting flag bits, and the one or more starting flag bits are calculated based on a shared key of a terminal and the access network device.

The embodiments of the present disclosure provide a terminal, including a transceiver, a processor, and a memory. The memory is configured to store a computer program, and the processor is configured to call and run the computer program stored in the memory to enable the terminal to perform the above method.

The embodiments of the present disclosure provide an access network device, including a transceiver, a processor, and a memory. The memory is configured to store a computer program, and the processor is configured to call and run the computer program stored in the memory to enable the access network device to perform the above method.

By adopting the above solution, the downlink sensing signal is generated by extracting bits from sensing sequences based on starting flag bits, and the starting flag bits are calculated based on a shared key of the sending side and the receiving side. In this way, the starting flag bits calculated by the shared key can hide the arrangement of the bits extracted from the sensing sequences, and for the downlink sensing signal generated in this way, only the receiving end with the same shared key can accurately measure the echo signal of the downlink sensing signal to obtain a sensing result, thereby improving the security of the downlink sensing signal itself and ensuring the security of the sensing scenario.

### BRIEF DESCRIPTION OF THE DRAWINGS

FIG. 1 is a schematic diagram of an application scenario according to the embodiments of the present disclosure.
FIG. 2 is a schematic flowchart of a communication method according to an embodiment of the present disclosure.
FIG. 3 is a schematic flowchart of a communication method according to another embodiment of the present disclosure.
FIG. 4 is a schematic diagram of relevant parameters for configuring a PRS sequence and a PRS resource according to an embodiment of the present disclosure.
FIG. 5 is a schematic diagram of a modulation mapping processing scenario in a QPSK mode according to an embodiment of the present disclosure.
FIG. 6 is a schematic diagram of a modulation mapping processing scenario in a 16QAM mode according to an embodiment of the present disclosure.
FIG. 7 is an example diagram of a processing flow of a communication method according to an embodiment of the present disclosure.
FIG. 8 is another example diagram of a processing flow of a communication method according to an embodiment of the present disclosure.
FIG. 9 is a schematic block diagram of a terminal according to an embodiment of the present disclosure.
FIG. 10 is a schematic block diagram of an access network device according to an embodiment of the present disclosure.
FIG. 11 is a schematic block diagram of a communication device according to an embodiment of the present disclosure.

### DETAILED DESCRIPTION

The technical solution in the embodiments of the present disclosure may be applied to various communication systems, for example: LTE (Long Term Evolution), LTE-A (LTE-Advanced), NR (New Radio), evolution of NR, WLAN (Wireless Local Area Network), WiFi (Wireless Fidelity), or other communication systems.

The embodiments of the present disclosure describe each embodiment with reference to a network device and a terminal, where the terminal may be mobile or fixed, and the terminal may also be referred to as a mobile station, a user unit, and the like. The terminal may be a station in a WLAN, or may be a terminal such as a smart terminal, a wireless modem, a laptop computer, or a tablet computer, etc. In the embodiments of the present disclosure, the terminal may be a VR terminal/AR terminal, an industrial control terminal, an unmanned driving terminal, a telemedicine terminal, a smart grid terminal, a transportation security terminal, a smart city terminal, or a smart home wireless terminal, etc. As an example and not a limitation, in the embodiments of the present disclosure, the terminal may also be a wearable device.

In the embodiments of the present disclosure, the network device may be a device used for communication with the terminal, and the network device may be an access point in a WLAN, may be an evolved base station in LTE, or a relay station, or a vehicle-mounted device, a wearable device, and a network device (gNB) in an NR network, or a network device in a future evolved PLMN (Public Land Mobile Network) network, or a network device in a non-terrestrial network, etc. As an example and not a limitation, in the embodiments of the present disclosure, the network device may have mobility, for example, the network device may be a mobile device.

To facilitate understanding of the technical solutions of the embodiments of the present disclosure, the related technologies in the embodiments of the present disclosure are described below, and the following related technologies, as optional solutions, may be arbitrarily combined with the technical solutions of the embodiments of the present disclosure, all of which fall within the protection scope of the embodiments of the present disclosure.

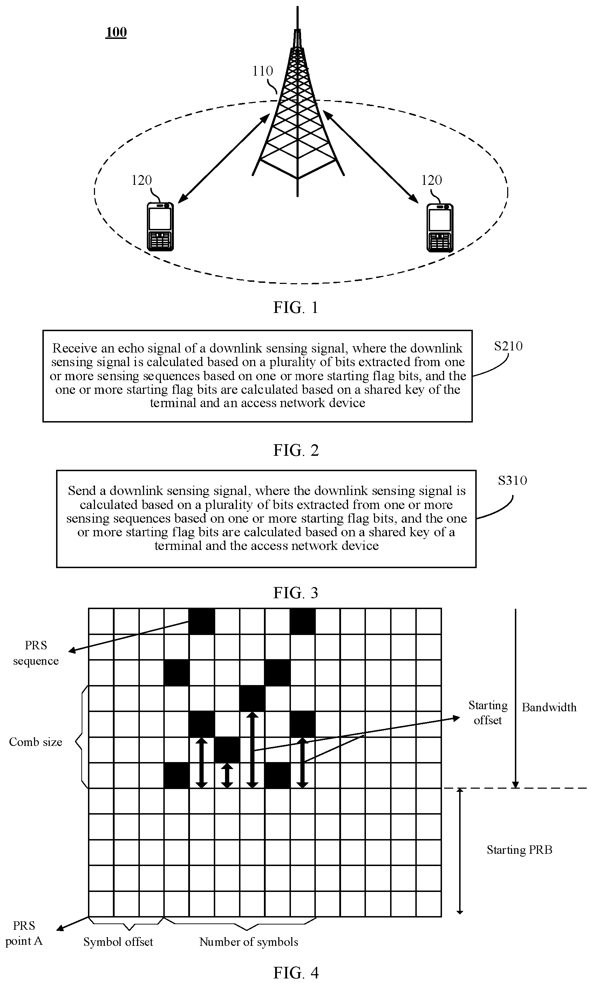

FIG. 1 exemplarily shows a communication system 100. The communication system includes a network device 110 and two terminals 120. In a possible implementation, the communication system 100 may include a plurality of network devices 110, and a coverage range of each network device 110 may include other numbers of terminals 120, which is not limited in the embodiments of the present disclosure. In a possible implementation, the communication system 100 may further include other network entities such as a mobility management entity, an access and mobility management function, and the like, which is not limited in the embodiments of the present disclosure. The network device may further include an access network device and a core network device. That is, the communication system may further include a plurality of core networks for communicating with the access network device. The access network device may be a base station of LTE, LTE-A, or NR systems. Taking the communication system shown in FIG. 1 as an example, the communication devices may include the network device and terminals having communication functions, the communication device may also include other devices in the communication system, such as other network entities including a network controller, a mobility management entity, and the like, which is not limited in the embodiments of the present disclosure.

FIG. 2 is a schematic flowchart of a communication method performed by a terminal according to an embodiment of the present disclosure. The method includes at least a part of the following content.

In S210: an echo signal of a downlink sensing signal is received, where the downlink sensing signal is calculated based on a plurality of bits extracted from one or more sensing sequences based on one or more starting flag bits, and the one or more starting flag bits are calculated based on a shared key of the terminal and an access network device.

FIG. 3 is a schematic flowchart of a communication method performed by an access network device according to another embodiment of the present disclosure. The method includes at least a part of the following content.

In S310: a downlink sensing signal is sent, where the downlink sensing signal is calculated based on a plurality of bits extracted from one or more sensing sequences based on one or more starting flag bits, and the one or more starting flag bits are calculated based on a shared key of a terminal and the access network device.

The access network device may include at least one of: a base station, a gNB, an eNB, a network device in a future evolved PLMN network, a network device in an NTN network, a satellite, and so on.

The downlink sensing signal may also be referred to as any one of a downlink sensing reference signal, or a sensing reference signal, and so on. For example, the downlink sensing reference signal may be one of a positioning reference signal (Positioning Reference Signal, PRS), a demodulation reference signal (Demodulation Reference Signal, DM-RS), a channel state information reference signal (Channel State Information Reference Signal, CSI-RS), and so on, and all possible specific types of the downlink sensing reference signal are not limited or exhaustively listed herein.

The echo signal of the downlink sensing signal may refer to: an echo signal of the downlink sensing signal that has been reflected by a sensing target. In some possible examples, the echo signal of the downlink sensing signal may also be referred to as a reflected signal of the downlink sensing signal, or simply an echo signal, or simply a reflected signal, and all possible names of the echo signal of the downlink sensing signal are not limited or exhaustively listed herein. In some possible examples, the sensing target may also be simply referred to as a target.

In some possible implementations, a shared key is calculated by the terminal and a core network device respectively, and the shared key is configured on the access network device side.

On the terminal side, the shared key is calculated based on a first key shared between the terminal and the core network device. That is, the processing by the terminal may further include: calculating the shared key based on the first key shared between the terminal and the core network device.

On the access network device side, the shared key is configured. Before the access network device sends the downlink sensing signal, the method further includes: receiving the shared key from the core network device.

On the core network device side, the shared key is calculated based on the first key shared between the terminal and the core network device. The processing by the core network device may include: calculating the shared key based on the first key shared with the terminal; and sending a first request to the access network device, where the first request may carry the shared key. A function of the first request may include at least one of: triggering a sensing service, configuring sensing information, configuring sensing-related information, and configuring sensing security information.

On the terminal side, as long as the shared key is calculated before demodulating the echo signal of the downlink sensing signal, it falls within the protection scope of this embodiment; on the access network device side, as long as the shared key is received before sending the downlink sensing signal, it falls within the protection scope of this embodiment.

The core network device may include at least one of: an AMF (access and mobility management function), an AUSF (authentication server function), an SEAF (security anchor function), an AKMA server (AAnF, AKMA Anchor Function), a GBA (Generic Bootstrapping Architecture) server BSF (bootstrapping server function), an AF (application function), an SF, and so on. The AMF and the SEAF may also be set together.

Correspondingly, the key shared between the terminal and the core network device may be one of: K_{AMF} shared between the terminal and the AMF, a K_{SEAF} shared between the terminal and the AUSF (AMF), a K_{AKMA} shared between the terminal and the AKMA, a K_{AF} shared between the terminal and the AF, a GBA key such as K_{sNAF} shared between the terminal and the GBA server, and a K_{SF} shared between the terminal and the SF. It should be understood that this is only an exemplary description, and all possible key types of the key shared between the terminal and the core network device are not limited or exhaustively listed.

It should be understood that, since the terminal and the core network device essentially adopt the same key algorithm and the same parameter(s) to calculate the shared key, the shared keys obtained by the two should theoretically be the same, and this embodiment does not distinguish between different names of shared keys calculated by different devices.

The key algorithm used by the terminal and the core network device to calculate the shared key may be default or specified by a protocol. For example, the key algorithm may include at least one of: a key derivation function (KDF), a first authentication function, a second authentication function, a third key generation function (e.g., which may be represented as f3), a fourth key generation function (e.g., which may be represented as f4), a fifth key generation function (e.g., which may be represented as f5), a hash algorithm, an advanced encryption standard (AES), SNOW 3G (Snow ThirdGeneration), ZUC (ZUChongzhi), an XOR calculation, and a direct connection calculation. The hash algorithm may include HMAC-SHA-256 (Hash-based Message Authentication Code - Secure Hash Algorithm 256, which may be represented as SHA-256), or other hash algorithms or hash functions may also be adopted, which are not exhaustively listed in this embodiment.

Taking the first key K_{AMF} shared between the terminal and the core network device as an example, the shared key K calculated by the terminal and the core network device based on the first key shared between the terminal and the core network device may be represented by the following formula: K=KDF(K_{AMF}). The shared key is simply denoted as K here; in some examples, the shared key may also be represented alternatively as a ciphering key or the like, and possible representations of the shared key are not limited or exhaustively listed here.

Optionally, on the terminal and core network device side, the shared key is calculated based on the first key and at least one of the following parameters: an identifier of the access network device, an identifier of the terminal, a random number, and an identifier of a sensing service.

The identifier of the sensing service may also be replaced with a sensing service type, and the identifier of the sensing service may be represented as a sensing service ID.

The random number may be represented as Nonce.

Taking the first key K_{AMF} as an example, on the terminal and core network device (AMF) side, the shared key may be calculated by adopting the following formula: K=KDF(K_{AMF}, "Sensing", sensing service ID, UE ID, gNB ID, Nonce), where K represents the shared key, "Sensing" represents an indicator of the sensing service, the sensing service ID is the ID of the sensing service, the UE ID is an identifier of the terminal, and the gNB ID is an identifier of the access network device; in the formula, except for K_{AMF}, the other parameters are all optional parameters.

Taking the first key K_{SEAF} as an example, on the terminal and core network device (AUSF) side, the shared key may be calculated by adopting the following formula: K=KDF(K_{SEAF}, "Sensing", sensing service ID, UE ID, gNB ID, Nonce); the meanings of various parameters in the formula are the same as those in the above example and are not repeated, and in the formula, except for K_{SEAF}, the other parameters are all optional parameters.

It should be understood that this is only an exemplary description, and the aforementioned key K_{SEAF} or K_{AMF} may also be replaced with any one of K_{AKMA}, K_{AF}, K_{sNAF}, K_{SF}, etc., which are not repeatedly described here.

Furthermore, the random number may be generated by the core network device. The identifier of the sensing service and/or the random number on the terminal side may be configured.

Specifically, on the terminal side, the method further includes: receiving first information, where the first information includes at least one of: an identifier of a sensing service, and a random number.

In a case, receiving, by the terminal, the first information, may be: receiving the first information from the core network device. Correspondingly, the processing on the core network device side further includes: receiving a sensing service request from the SF, where the sensing service request carries the identifier of the sensing service; generating a random number; and sending the first information to the terminal, where the first information includes at least one of: the identifier of the sensing service, and the random number. The first information may be carried by a second request sent from the core network device to the terminal. A function of the second request may include at least one of: triggering the sensing service, configuring sensing information, configuring sensing-related information, and configuring sensing security information.

In this case, from which core network device the terminal receives the first information may also be used to determine a type of the first key used by the terminal. For example, if the terminal receives the first information from the AMF, it determines the first key as K_{AMF}; for example, if the terminal receives the first information from the AUSF, it determines the first key as K_{SEA}F; for example, if the terminal receives the first information from the AAnF, it determines the first key as K_{AKMA} or K_{AF}; for example, if the terminal receives the first information from the NAF, it determines the first key as K_{sNAF}.

In a case, receiving, by the terminal, the first information may be: receiving the first information from the access network device.

The processing by the core network device before calculating the shared key further includes: receiving a sensing service request from the SF, where the sensing service request carries an identifier of a sensing service. The processing by the core network device after calculating the shared key further includes: sending second information to the access network device, where the second information includes at least one of: an identifier of the sensing service, and a random number. The second information may be carried by a first request; that is, the first request may carry the shared key, the identifier of the sensing service, and the random number. A function of the first request may include at least one of: triggering the sensing service, configuring sensing information, configuring sensing-related information, and configuring sensing security information.

Correspondingly, the processing by the access network device may include: receiving the second information from the core network device. Furthermore, the processing by the access network device after receiving the second information may include: sending first information to the terminal, where the first information includes at least one of: an identifier of the sensing service, and a random number. The first information may be carried by a third request sent from the access network device to the terminal. A function of the third request may include at least one of: triggering the sensing service, configuring sensing information, configuring sensing-related information, configuring sensing security information.

In this case, a type of the first key used by the terminal may be default or specified by a protocol. Alternatively, the third request may carry an identifier of the core network device (e.g., at least one of an ID, a name, a number, etc.); correspondingly, the terminal may determine the type of the first key based on the identifier of the core network device carried in the third request.

In some possible implementations, on the terminal side, the shared key is calculated based on a second key shared between the terminal and the access network device. On the access network device side, the shared key is calculated based on the second key shared between the terminal and the access network device. As long as the shared key is calculated before demodulating the echo signal of the downlink sensing signal on the terminal side, it falls within the protection scope of this embodiment; as long as the shared key is calculated before sending the downlink sensing signal on the access network device side, it falls within the protection scope of this embodiment.

The second key shared between the terminal and the access network device may include one of: an access stratum key shared between the terminal and the access network device, an access stratum security base key shared between the terminal and the access network device, a next hop key (NH) shared between the terminal and the access network device, and a physical layer key shared between the terminal and the access network device.

The access stratum (AS) security base key may be K_{gNB}. Exemplarily, K_{gNB} may be an initial K_{gN}B specified in a relevant protocol, or K_{NG-RAN}. Here, K_{NG-RAN} may also be represented alternatively as K_{NG-RAN*}, alternatively represented as a non-initial key K_{gNB}. This embodiment does not limit the derivation method for the access stratum security base key.

The access stratum key may include at least one of: a user plane (UP) integrity protection (or check) key K_{Upint}, a UP encryption key K_{UPenc}, a control plane integrity protection (or check) key K_{RRCint}, and a control plane encryption key K_{RRCenc}. This embodiment does not limit the derivation method for each access stratum key.

The physical layer key may be generated based on a feature of a physical layer channel between the terminal and the access network device; this embodiment does not limit a specific generation method for the physical layer key; and exemplarily, the physical layer key may be represented as Kphy.

It should be understood that the above is only an exemplary description of the second key, and in actual processing, the second key may also be a key generated or shared in other manners, and all key types that may serve as the second key are not limited or exhaustively listed here.

Optionally, the second key used by the terminal and the access network device may be default between them or specified by a protocol. For example, the terminal and the access network device may default to using K_{NG-RAN} as the second key.

Optionally, the terminal may determine the second key. The processing by the terminal may further include: sending, by the terminal, an identifier of the second key to the access network device. The processing by the access network device before sending the downlink sensing signal may further include: receiving the identifier of the second key from the terminal; and determining the second key based on the identifier of the second key.

Optionally, the access network device may determine the second key. The processing by the access network device before sending the downlink sensing signal may further include: sending an identifier of the second key to the terminal. The processing by the terminal may further include: receiving the identifier of the second key from the access network device; and determining the second key based on the identifier of the second key.

The descriptions regarding key algorithms used by the terminal and the access network device for calculating the shared key are the same as those in the above embodiments and is not repeated.

Taking the second key as KgNB as an example, the shared key calculated by the terminal and the access network device based on the second key may be represented by the following formula: K=KDF(KgNB).

Optionally, the shared key is calculated based on the second key and at least one of the following parameters: an identifier of the access network device, a random number, an identifier of the terminal, and an identifier of the sensing service. The random number may be represented as Nonce.

Still taking the second key as KgNB as an example, the calculation of the shared key by the terminal and the access network device may be represented by the following formula: the calculation of the shared key may be represented by the following formula: K=KDF(KgNB, "Sensing", sensing service ID, UE ID, gNB ID, Nonce), where the meanings of parameters in the formula are the same as those defined in the above embodiments; in the formula, except for the second key KgNB, all other parameters are optional parameters.

It should be understood that the above is only an exemplary description of the parameters used for calculating the shared key, and in actual processing, other parameters may be added, and for example, an indicator of the sensing service may also be included to indicate performing the sensing service, and all parameters that may be used for calculating the shared key is not exhaustively listed here.

In this embodiment, the random number is generated by the access network device. The identifier of the sensing service and/or the random number on the terminal side may be configured by the access network device.

Specifically, on the terminal side, before receiving the echo signal of the downlink sensing signal, the method further includes: receiving first information, where the first information includes at least one of: an identifier of the sensing service, a random number. Specifically, receiving the first information may be: receiving the first information from the access network device.

Correspondingly, on the access network device side, before sending the downlink sensing signal, the method further includes: sending first information to the one or more nodes, where the first information includes at least one of: an identifier of the sensing service, a random number. Specifically, sending the first information to the one or more nodes may be: sending the first information to the terminal. The first information sent from the access network device may be carried by a third request sent from the access network device to the terminal. A function of the third request may include at least one of: triggering the sensing service, configuring sensing information, configuring sensing-related information, and configuring sensing security information.

In some possible implementations, on the terminal and access network device side, the shared key is the second key shared between the terminal and the access network device. The related description regarding the second key is the same as that in the above embodiments, and is not repeated.

In some possible implementations, on the terminal and access network device side, the shared key is pre-configured. Regarding the method of pre-configuring the same shared key on the terminal and the access network device respectively, it may be pre-configured by the core network device to the terminal and access network device side respectively, and the configuration method is not limited in this embodiment; or, it may be manually configured on the terminal and the access network device, and the method of configuring the shared key to the terminal and the access network device respectively is not limited or exhaustively listed here, as long as the terminal and the access network device use the same shared key, it falls within the protection scope of this embodiment.

In some possible implementations, the one or more sensing sequences are calculated by the terminal and the access network device respectively. Moreover, the one or more sensing sequences should be the same on the terminal side and the access network device side, and therefore, the processing of different devices is not respectively described.

The one or more sensing sequences are generated based on one or more generation parameters, where different sensing sequences correspond to different generation parameters. Here, the sensing sequence may alternatively be referred to as any one of a PRS sequence, a PRS generation sequence, a sensing signal sequence, a PRS sequence bitstream, a sensing signal sequence bitstream, a sequence bitstream, a bitstream, a sensing bitstream, etc., and all possible names of the sensing sequence are not limited or exhaustively listed here.

The one or more generation parameters are determined based on at least one of: a configuration parameter, the shared key, one or more key truncation ranges, one or more calculation parameters. Different key truncation ranges among the one or more key truncation ranges correspond to different sensing sequences, different key truncation ranges among the one or more key truncation ranges are used for determining different generation parameters, different calculation parameters among the one or more calculation parameters correspond to different sensing sequences, and different calculation parameters among the one or more calculation parameters are used for determining different generation parameters.

The configuration parameter may refer to a configuration value specified by a protocol, for example, it may be a downlink PRS sequence ID, which may be represented as ${n}_{ID , seq}^{PRS}$. The configuration parameter may be given by a higher layer, for example, it may be given by a parameter dl-PRS-SequenceID (downlink PRS sequence identifier) configured by the higher layer, where ${n}_{seq}^{PRS} ∈ \left\{0,1,…,4095\right\}$.

Each type of key truncation range among the one or more key truncation ranges is used for determining a starting bit and an ending bit for truncating bits from the shared key; different key truncation ranges are used for determining different starting bits and/or ending bits for truncating bits from the shared key.

For example, any key truncation range may be used to indicate at least one of a starting bit, an ending bit, a truncation length, and a truncation rule for truncating the shared key. For example, a certain key truncation range indicates that the starting bit and ending bit for truncating the shared key are {0..31}; for example, a certain key truncation range indicates that the starting bit and ending bit for truncating the shared key are {97..128}; for another example, a certain key truncation range is indicated as a truncation rule, where the truncation rule is used for determining that 32 bits at specified positions (which may be continuous or non-continuous) are truncated from the shared key, and so on. Possible indicated contents of the key truncation range are not limited or exhaustively listed here.

The one or more key truncation ranges, or each key truncation range and its corresponding relationship with the generation parameter and/or the sensing sequence, may be determined by the access network device and configured to the terminal; or, may be determined by the terminal and configured to the access network device; or, may be determined by the core network device and configured to the terminal and the access network device; or, may be determined by the SF and configured to the terminal and the access network device.

Each type of calculation parameter among the one or more calculation parameters is used for calculating the corresponding generation parameter in conjunction with the shared key.

The one or more calculation parameters, or each calculation parameter and its corresponding relationship with the generation parameter and/or the sensing sequence, may be determined by the access network device and configured to the terminal; or, may be determined by the terminal and configured to the access network device; or, may be determined by the core network device and configured to the terminal and the access network device; or, may be determined by the SF and configured to the terminal and the access network device.

Taking any one of the one or more sensing sequences as a j-th sensing sequence, and the generation parameter corresponding to the j-th sensing sequence as a j-th generation parameter as an example, the j-th generation parameter may be determined based on at least one of: a configuration parameter, the shared key, a j-th key truncation range among the one or more key truncation ranges, a j-th calculation parameter among the one or more calculation parameters. Herein, j is a positive integer.

Optionally, the j-th generation parameter is determined based on the configuration parameter. Specifically, the j-th generation parameter may be equal to the configuration parameter.

Optionally, the j-th generation parameter is calculated based on the configuration parameter and the shared key. The related description of the configuration parameter is the same as that in the above examples, and is not repeated.

The j-th generation parameter may be obtained by shifting the configuration parameter based on the shared key. Specifically, the j-th generation parameter may be: obtained by right shifting the configuration parameter by a first value, where the first value is equal to a decimal value converted from the shared key. For example, it is assumed that the configuration parameter is represented as ${n}_{ID , seq}^{PRS} 1$, the j-th generation parameter is represented as ${n}_{ID , seq}^{PRS} 2$, where ${n}_{ID , seq}^{PRS} 2$ is obtained by right shifting ${n}_{ID , seq}^{PRS} 1$ by the ciphering key (a key in the positioning system, converted to decimal).

Optionally, the j-th generation parameter is calculated based on the shared key and the j-th key truncation range.

The j-th generation parameter may be a plurality of bits truncated from the shared key based on the j-th key truncation range. For example, if the j-th truncation range indicates the starting bit and ending bit for truncating as 0 to 31 bit, the j-th generation parameter is a total of 32 bits, 0 to 31 bit, truncated from the shared key. For example, if the j-th truncation range indicates the starting bit and ending bit for truncating as 1 to 12 bit, the j-th generation parameter is a total of 12 bits, 1 to 12 bit, truncated from the shared key. It should be understood that this is only an exemplary description and does not limit the key truncation range.

Optionally, the j-th generation parameter is calculated based on the shared key and the j-th calculation parameter.

The calculation method of the j-th generation parameter may be a mod calculation; for example, the j-th generation parameter may be equal to a value of the shared key mod the j-th calculation parameter, and taking the j-th calculation parameter as possibly 2³¹ as an example, the calculation of the j-th generation parameter ${n}_{ID , seq}^{PRS} - j$ may be represented as ${n}_{ID , seq}^{PRS} - j = K mod {2}^{31}$*,* where K represents the shared key. It should be understood that this is only an exemplary description and does not limit the calculation parameter.

Based on the above processing, one or more generation parameters may be obtained, and it should be pointed out that different generation parameters may be generated by different methods, or different key truncation ranges, or different calculation parameters, described above, and finally, if a plurality of generation parameters are obtained, the specific contents or specific values of the different generation parameters are different.

Different generation parameters among the one or more generation parameters are used for calculating different sensing sequences. Because the specific values or contents of different generation parameters themselves are different, it may ensure that different sensing sequences are different. In this embodiment, the calculation method for each sensing sequence may be the same, and for example, the sensing sequences may all be gold sequences, that is, the calculation method for the gold sequence is used to calculate each sensing sequence.

Still taking the j-th generation parameter and the j-th sensing sequence as an example, assuming that the j-th sensing sequence is denoted as c(n), where n=0,1,..., MPN-1, and the method for calculating c(n) is as follows: $c \left(n\right) = \left({x}_{1}\left(n+{N}_{c}\right)+{x}_{2}\left(n+{N}_{c}\right)\right) mod 2$ ${x}_{1} \left(n+31\right) = \left({x}_{1}\left(n+3\right)+{x}_{1}\left(n\right)\right) mod 2$ ${x}_{2} \left(n+31\right) = \left({x}_{2}\left(n+3\right)+{x}_{2}\left(n+2\right)+{x}_{2}\left(n+1\right)+{x}_{2}\left(n\right)\right) mod 2$
where NC = 1600;
a first m-sequence is initialized as x1(0) = 1, ..., x1(n) = 0, n = 1, ..., 30;
the initialization of a second m-sequence is: ${c}_{init} = {\sum }_{i = 0}^{30} {x}_{2} \left(i\right) ⋅ {2}^{i}$ ${c}_{init} = \left(\begin{matrix}{2}^{22} \left|\frac{{n}_{ID , seq}^{PRS}}{1024}\right| + {2}^{10} \left({N}_{symb}^{slot}{n}_{s , f}^{μ}+l+1\right) \left(2\left({n}_{ID , seq}^{PRS}mod 1024\right)+1\right) \\ + \left({n}_{ID , seq}^{PRS}mod 1024\right)\end{matrix}\right) mod {2}^{31}$

The length of the Gold sequence c(n) is: 2³¹-1; ${n}_{ID , seq}^{PRS}$ may be the j-th generation parameter, the specific generation method has been detailed in the above embodiments and will not be repeated here; ${N}_{symb}^{slot}$ is the number of symbols in a slot; ${n}_{s , f}^{μ}$ is a slot number; *l* is an OFDM symbol within the slot to which the sequence is mapped.

In some possible implementations, the one or more starting flag bits are calculated by the terminal and the access network device respectively. Moreover, the one or more starting flag bits should be the same on the terminal side and the access network device side, therefore, the processing by different devices is not described respectively.

In an embodiment, the one or more starting flag bits include a starting flag bit. The starting flag bit corresponds to the one or more sensing sequences.

In this embodiment, the starting flag bit is referred to as a first starting flag bit. Specifically, the first starting flag bit may be calculated based on a first calculation method, the shared key, and a first parameter.

The first calculation method may be configured according to actual situations, for example, it may be a mod calculation (mod), etc.

The first parameter may be configured according to actual situations, for example, the first parameter may be equal to a length of the sensing sequence; in this embodiment, the sensing sequences may be one or more, and the lengths of different sensing sequences should be the same, therefore, the first parameter may be equal to a length of any one sensing sequence. The length of the sensing sequence may be default or specified by a protocol. Alternatively, the length of the sensing sequence may be determined based on a length of the downlink sensing signal; the length of the downlink sensing signal may be related to a number of subcarriers and/or a number of symbols corresponding to the downlink sensing signal, where the number of subcarriers and the number of symbols corresponding to the downlink sensing signal may be default or specified by a protocol, which is not limited in this embodiment.

Exemplarily, any one sensing sequence may be denoted as c(n), and then the first parameter may be equal to the length of c(n), for example, it may be 2³¹-1.

For example, the first starting flag bit may be calculated by: flag_start = ciphering key mod (2³¹-1), where flag_start is the first starting flag bit, ciphering key is the shared key, and "2³¹-1" is the first parameter.

In an embodiment, the one or more starting flag bits include a plurality of starting flag bits, and different starting flag bits among the plurality of starting flag bits are calculated based on the shared key and different offset values.

The plurality of starting flag bits are calculated based on the shared key and a plurality of offset values, where different offset values among the plurality of offset values are used to calculate different starting flag bits.

Any one offset value among the plurality of offset values may be an integer, for example, it may be any one of a positive integer, a negative integer, or 0. The plurality of offset values may be pre-generated by the access network device and configured to the terminal; or, the plurality of offset values may be pre-generated by the terminal and configured to the access network device; or, the plurality of offset values may be configured by the core network device to the terminal and the access network device; or, the plurality of offset values may be configured by the sensing function (SF) to the terminal and the access network device.

The corresponding relationship between each offset value among the plurality of offset values and each starting flag bit may be default; or, each offset value among the plurality of offset values and its corresponding relationship with each starting flag bit may be pre-determined by the access network device and configured to the terminal; or, each offset value among the plurality of offset values and its corresponding relationship with each starting flag bit may be pre-determined by the terminal and configured to the access network device; or, each offset value among the plurality of offset values and its corresponding relationship with each starting flag bit may be configured by the core network device to the terminal and the access network device; or, each offset value among the plurality of offset values and its corresponding relationship with each starting flag bit may be configured by the SF to the terminal and the access network device.

The specific values of different offset values among the plurality of offset values are different.

The offset value may also be alternatively referred to as any one of a second parameter, an adjustment parameter, an adjustment value, a starting adjustment value, a starting bit offset value, or an offset parameter, etc., and the possible names of the offset value are not limited or exhaustively listed here.

Taking any one starting flag bit as an i-th starting flag bit and an offset value corresponding to the i-th starting flag bit as an i-th offset value as an example, the method for calculating the i-th starting flag bit may include: calculating an i-th initial value from the shared key and the first parameter based on the first calculation method, and adjusting the i-th initial value based on the i-th offset value to obtain the i-th starting flag bit. Herein, i is a positive integer.

For example, the i-th starting flag bit may be calculated by: flag_start-i = ciphering key mod (2³¹-1) + offset-i, where flag_start-i is the i-th starting flag bit, offset-i is the i-th offset value, ciphering key is the shared key, and "2³¹-1" is the first parameter. An (i+1)-th starting flag bit may be calculated by: flag_start-i+1 = ciphering key mod (2³¹-1) + offset-i+1, where flag_start-i+1 is the (i+1)-th starting flag bit, offset-i+1 is the (i+1)-th offset value, and the value of offset-i is different from the value of offset-i+1.

In some possible implementations, on the access network device side, the downlink sensing signal is generated based on a modulation symbol, where the modulation symbol is calculated from a plurality of bits extracted from the one or more sensing sequences based on the one or more starting flag bits, by a first modulation scheme.

In an embodiment, the one or more starting flag bits include only one starting flag bit, i.e., the first starting flag bit in the above embodiments. The one or more sensing sequences include a plurality of sensing sequences.

The calculation method for the first starting flag bit has been detailed in the above embodiments and will not be repeated here. Different sensing sequences among the plurality of sensing sequences correspond to different generation parameters, and thus the contents or values of different sensing sequences are different.

On the access network device side, processing for generating the downlink sensing signal may include: sequentially extracting a plurality of bits from the plurality of sensing sequences based on the first starting flag bit; calculating a modulation symbol from the plurality of bits based on the first modulation scheme, and mapping the modulation symbol onto a corresponding sensing signal time-frequency resource, to obtain the downlink sensing signal.

It should also be noted that the processing of extracting the plurality of bits and the processing of calculating the modulation symbol may be performed alternately; for example, after extracting a plurality of bits for a first time, the plurality of bits are processed based on the first modulation scheme, to map onto a corresponding time-frequency resource, and then after extracting a plurality of bits for a second time, the plurality of bits are processed based on the first modulation scheme, to map onto a corresponding time-frequency resource, and so on, until time-frequency resources of the sensing signal are fully mapped.

The sensing signal time-frequency resource may refer to one or more time-frequency resources corresponding to the sensing signal, each time-frequency resource may include a symbol and a subcarrier. There may also be an order for the aforementioned mapping processing; for example, the order may be from early to late or from previous to later in the time domain, and from low to high in the frequency domain; and for example, the mapping may start from a subcarrier with the lowest frequency in a first symbol in the corresponding slot (a slot for sending the sensing signal).

Optionally, sequentially extracting the plurality of bits from the plurality of sensing sequences based on the first starting flag bit, may include: sorting the plurality of sensing sequences to form the sorted plurality of sensing sequences; starting from a first sensing sequence among the sorted plurality of sensing sequences, and for each sensing sequence, extracting a plurality of bits starting from a bit corresponding to the first starting flag bit.

Starting from the first sensing sequence among the sorted plurality of sensing sequences, and for each sensing sequence, extracting the plurality of bits starting from the bit corresponding to the first starting flag bit, may be: by using the first sensing sequence as a current sensing sequence, extracting a plurality of bits starting from a bit position corresponding to the first starting flag bit in the current sensing sequence; in a case where it is determined that the extraction for the current sensing sequence is completed, by using a second sensing sequence among the sorted plurality of sensing sequences as the current sensing sequence, extracting a plurality of bits starting from a bit position corresponding to the first starting flag bit in the current sensing sequence; in a case where it is determined that the extraction for the current sensing sequence is completed, by using a third sensing sequence among the sorted plurality of sensing sequences as the current sensing sequence, extracting a plurality of bits starting from a bit position corresponding to the first starting flag bit in the current sensing sequence; and so on, which are not repeated here.

The first modulation scheme is quadrature amplitude modulation (QAM). Furthermore, the first modulation scheme may be one of: 16QAM, 64QAM, 256QAM, and so on.

The number of the plurality of bits extracted each time from the sensing sequence may be related to the first modulation scheme. Exemplarily, if the first modulation scheme is 16QAM, the number of bits extracted each time from the sensing sequence is 4. Exemplarily, if the first modulation scheme is 64QAM, the number of bits extracted each time from the sensing sequence is 6. Exemplarily, if the first modulation scheme is 256QAM, the number of bits extracted each time from the sensing sequence is 8.

It should also be noted that the number of sensing sequences may be determined based on the first modulation scheme.

In conjunction with related technologies, after the PRS sequence (sensing sequence) is generated, it is mapped to time-frequency grid points to generate a PRS resource; the PRS resource is repeated according to a certain rule to generate a PRS resource set which is then delivered.

Relevant parameters for configuring the PRS sequence and the PRS resource are described below in conjunction with FIG. 4:
PRS Point A (Point A): this field specifies an absolute frequency of the reference resource block of DL-PRS. Its lowest subcarrier is also referred to as DL-PRS Point A. Value: 0 to 3278165.
startPRB (starting PRB): this field specifies a starting PRB index, which is defined as a reference DL-PRS Point A relative to a positioning frequency layer. Value: 0 to 2176.
Bandwidth: this field specifies the number of PRBs allocated for the DL-PRS resource (allocated DL-PRS bandwidth), which is a multiple of 4 PRBs. Value: 1 to 163.
PRS sequence: the PRS sequence has a sequence ID value: 0 to 4095=0 to 2¹²-1.
Symbol offset: in a slot, it is the starting symbol of the DL-PRS resource. Value: 0 to 12.
NumSymbol (the number of symbols): in a slot, it is the number of symbols of each DL-PRS resource, 2, 4, 6, or 12.
Comb size: this field specifies a resource element spacing in each symbol of the DL-PRS resource. Value: 2, 4, 6, 12.
Starting offset: a resource element (RE) offset in the frequency domain of the first symbol in the DL-PRS resource. Value: 0 to CombSize-1.

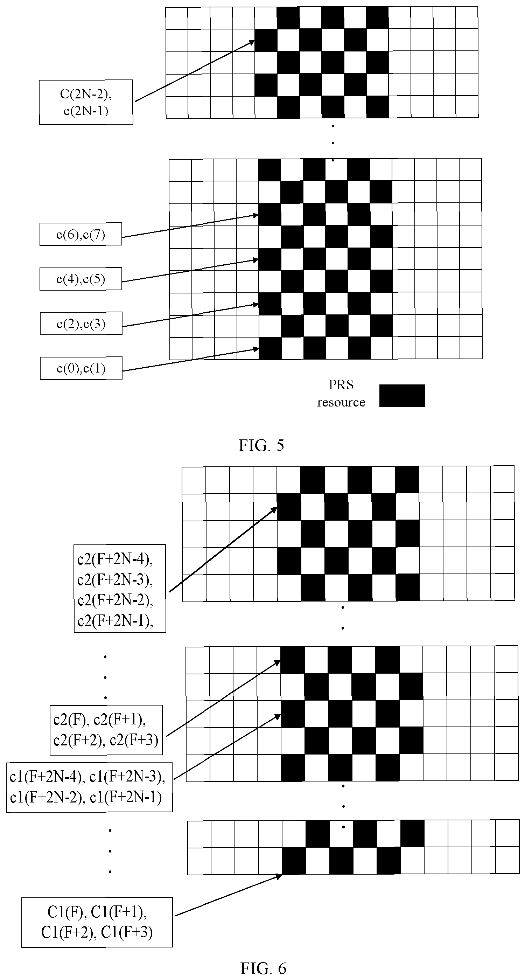

After the c(n) bitstream (sensing sequence, simply denoted as c(n)) is generated under the determined parameters (for example, parameters specified in a protocol, such as ${N}_{symb}^{slot}$ (the number of symbols in a slot), ${n}_{s , f}^{μ}$ (slot number), *l* (OFDM symbol in the slot to which the sequence is mapped), ${n}_{ID , seq}^{PRS}$, etc.), c(n) starting from c(0) is sequentially modulated into a symbol through QPSK modulation, and mapped to a subcarrier of the corresponding symbol. Assuming that the number of PRS subcarriers on the corresponding symbol in the corresponding slot is N, then in the original protocol, it is required to take c(0), c(1), ..., c(2N-1) bits from c(n), taking 2 bits sequentially, and then they may be mapped to the corresponding subcarriers to generate QPSK symbols. As shown in FIG. 5, taking the first symbol of the first resource as an example, sequentially taking {c(0), c(1)}, {c(2), c(3)}, {c(4), c(5)}, {c(6), c(7)}, ..., {c(2N-2), c(2N-1)}, symbols are obtained through QPSK modulation and respectively mapped to subcarriers of the first symbol of the first resource (PRS resource).

Therefore, if the number of PRS subcarriers on the symbol corresponding to the slot remains N unchanged, but the modulation scheme changes to require 4 or more bits per modulation, it is necessary to increase the number of sensing sequences to ensure that the number of generated symbols remains unchanged. For example, in 16QAM, 4 bits are modulated at a time, thus 2 sensing sequences are required to ensure that the number of PRS subcarriers on the symbol corresponding to the slot remains N unchanged; in 64QAM, 6 bits are modulated at a time, thus 3 sensing sequences are required; in 256QAM, 8 bits are modulated at a time, thus 4 sensing sequences are required.

Taking the first modulation scheme as 16QAM as an example, if QPSK in related technologies is changed to 16QAM, and it is ensured that the number of generated symbols after the modulation scheme is changed remains unchanged, then 2 c(n) sequences (sensing sequences) are generated, respectively: c1(n), c2(n). During modulation, bits from flag_start to flag_start+2N-1 of c1(n) and bits from flag_start to flag_start+2N-1 of c2(n) are taken; specifically, the modulation is performed by sequentially taking 4 bits (i.e., taking 4 bits in order each time), to generate 16QAM symbols, and map them to the corresponding time-frequency positions, thereby ensuring that the number of generated symbols remains unchanged.

Furthermore, taking 16QAM as an example, assuming that the number of PRS subcarriers on the corresponding symbol is N, and two sensing sequences are denoted as c1(n) and c2(n), respectively, the processing flow may include as follows.

First, under the determined parameter ${n}_{ID , seq}^{PRS} 1$, a c1(n) bitstream (a first sensing sequence) is generated; under another parameter ${n}_{ID , seq}^{PRS} 2$, a c2(n) bitstream (a second sensing sequence) is generated. ${n}_{ID , seq}^{PRS} 2$ is obtained by right-shifting ${n}_{ID , seq}^{PRS} 1$ by the ciphering key (the key in the positioning system, converted to decimal). It is ensured that ${n}_{ID , seq}^{PRS} 1$ and ${n}_{ID , seq}^{PRS} 2$ are different, thus the generated c1(n) and c2(n) are also different. It should be understood that the calculation parameter used for c1(n) and c2(n) may also include other relevant parameters specified in the protocol, for example, at least one of ${N}_{symb}^{slot} , { n}_{s , f}^{μ}$, *l*, etc., which are not repeated or exhaustively listed here.

Then, the flag position flag_start is calculated (for example, the first starting flag bit), flag_start = ciphering key mod (2³¹-1). Starting from the flag_start-th bit of c1(n) and c2(n), 4 bits are sequentially taken (2N bits are taken from c1(n) and c2(n), respectively), and modulated into 16QAM symbols and the symbols are mapped onto time-frequency grid points.

Specifically, the (flag_start)-th bit to the (flag_start+2N-1)-th bit are taken from c1(n) and c2(n) respectively, and are 16QAM modulated into symbols, and the symbols are mapped onto the corresponding subcarriers of the symbols. For example, as shown in FIG. 6, the (flag_start)-th bit of any c(n) is denoted as c(F) in FIG. 6; taking a first symbol of a first resource as an example, first, the (flag_start)-th bit to the (flag_start+2N-1)-th bit are taken from c1(n), taking 4 bits each time, for example, the first 4 bits taken are {c1(F), c1(F+1), c1(F+2), c1(F+3)}, and the N-th 4 bits taken are {c1(F+2N-4), c1(F+2N-3), c1(F+2N-2), c1(F+2N-1)}; then, the (flag_start)-th bit to the (flag_start+2N-1)-th bit are taken from c2(n), taking 4 bits each time, for example, 4 bits taken sequentially are {c2(F), c2(F+1), c2(F+2), c2(F+3)}, and the last 4 bits taken are {c2(F+2N-4), c2(F+2N-3), c2(F+2N-2), c2(F+2N-1)}.

In this embodiment, the possibility space of PRS is increased without changing the PRS length (N PRS subcarriers are generated on the corresponding symbol).

Optionally, extracting the plurality of bits sequentially from the plurality of sensing sequences based on the first starting flag bit, may include: sorting the plurality of sensing sequences and then concatenating them to obtain a total sensing sequence; starting from a bit corresponding to the first starting flag bit in the total sensing sequence, sequentially extracting the plurality of bits.

In this case, the relevant description of the number of bits extracted each time is the same as that in the above embodiments, for example, for 16QAM, 4 bits are extracted each time, and so on, which is not repeated here. In this case, the subsequent modulation and mapping processing are similar to those in the above embodiments, and therefore, the description thereof is not repeated.

Optionally, extracting the plurality of bits sequentially from the plurality of sensing sequences based on the first starting flag bit, may include: sorting the plurality of sensing sequences to form the sorted plurality of sensing sequences; based on the first starting flag bit, extracting the plurality of bits sequentially from the sorted plurality of sensing sequences, respectively; and concatenating the plurality of bits extracted respectively from the plurality of sensing sequences to obtain a plurality of bits extracted each time.

The difference from the above embodiments lies in that in any extraction processing, a plurality of bits are extracted from each sensing sequence, and then concatenated to obtain all bits that need to be extracted this time.

In this case, the relevant description of the total number of the concatenated plurality of bits is similar to that in the above embodiments, for example, for 16QAM, the total number of the concatenated plurality of bits is 4 bits, and so on, which is not repeated here.

The number of the plurality of bits extracted each time from each sensing sequence may be equal to the total number of the concatenated plurality of bits divided by the number of sensing sequences, for example, if the total number of the concatenated plurality of bits is 4 and the number of sensing sequences is 2, then the number of the plurality of bits extracted each time from each sensing sequence is 2.

The method of concatenating the plurality of bits extracted each time may be determined according to the order of the sensing sequences.

For example, in a case of 16QAM and two sensing sequences, starting from positions corresponding to the first starting flag bit in the 2 sensing sequences respectively, 2 bits are extracted from each of the two sensing sequences each time, and the 2 bits extracted from each sensing sequence are concatenated to obtain 4 bits. The method of concatenating the 4 bits extracted each time may be determined according to the order of the 2 sensing sequences. For example, 2 bits extracted from the first sensing sequence are placed in front, and 2 bits extracted from the second sensing sequence are placed in the back, and so on, and possible concatenation methods are not limited or exhaustively listed here.

In this case, the subsequent modulation and mapping processing are similar to those in the above embodiments, and therefore, the description thereof is not repeated.

In an embodiment, the one or more starting flag bits include only one starting flag bit, i.e., the first starting flag bit in the above embodiments. The one or more sensing sequences also include only one sensing sequence. The one sensing sequence is referred to as a first sensing sequence in this embodiments.

The calculation method of the first starting flag bit has been detailed in the above embodiments and will not be repeated here. The generation method of the first sensing sequence is any one of multiple possible generation methods for the j-th sensing sequence in the above embodiments.

On the access network device side, the processing for generating the downlink sensing signal may include: sequentially extracting a plurality of bits from the first sensing sequence based on the first starting flag bit; calculating a modulation symbol from the plurality of bits based on a first modulation scheme, and mapping the modulation symbol onto a corresponding sensing signal time-frequency resource to obtain the downlink sensing signal.

It should also be noted that the processing of extracting the plurality of bits and the processing of calculating the modulation symbol may be performed alternately; for example, after extracting a plurality of bits for a first time, and the plurality of bits are processed based on the first modulation scheme, to map onto the corresponding time-frequency resource, then a plurality of bits are extracted for a second time, and then, the plurality of bits are processed based on the first modulation scheme, to map onto the corresponding time-frequency resource, and so on, until the sensing signal time-frequency resources are fully mapped.

Sequentially extracting the plurality of bits from the first sensing sequence based on the first starting flag bit, may include: when extracting the plurality of bits from the first sensing sequence for a first time, extracting the plurality of bits starting from a position corresponding to the first starting flag bit; in extraction processing other than the first time, extracting the plurality of bits starting from a next bit of an ending bit of the previous extraction, and so on.

Preferably, the first modulation scheme is one of: 16QAM, 64QAM, 256QAM, etc. In this case, the relevant description regarding the number of the plurality of bits extracted each time is the same as that in the above embodiments, and is not repeated. Regarding specific modulation and mapping processing in this case, it is similar to those in the above embodiments, and the description thereof is not repeated.

Furthermore, in this case, if extraction of all bits in the first sensing sequence is completed, cyclic extraction may start from the 0-th bit (i.e., the first bit).

Optionally, the first modulation scheme may still use quadrature phase shift keying (QPSK). In this case, the number of the plurality of bits extracted each time may be 2 bits. The relevant processing for QPSK modulation and mapping PRS resources is also the same as the relevant description in the above embodiments, and is not repeated.

Regardless of which of the above schemes is used for modulation, this embodiment may adopt the starting flag bit calculated by the shared key to sequentially extract a plurality of bits from the sensing sequence for modulation and mapping, and since the shared key is known only to the sending and receiving sides, the calculated starting flag bit is confidential, thereby achieving the effect of hiding the starting flag bit of c(n) (the sensing sequence), and an attacker needs to traverse all values of c(n) to determine from which position c(n) starts to be modulated and mapped, therefore, the possibility for the attacker to measure the echo signal of the downlink sensing signal and obtain an accurate sensing result is reduced, and it can be seen that the solution provided in this embodiment may ensure the security of the sensing signal.

In an embodiment, the one or more starting flag bits include only a plurality of starting flag bits. The one or more sensing sequences include a plurality of sensing sequences, and different starting flag bits among the plurality of starting flag bits correspond to different sensing sequences.

On the access network device side, the processing for generating the downlink sensing signal may include: sequentially extracting a plurality of bits from the plurality of sensing sequences based on a starting flag bit corresponding to each sensing sequence; calculating a modulation symbol from the plurality of bits based on a first modulation scheme, and mapping the modulation symbol onto a corresponding sensing signal time-frequency resource to obtain the downlink sensing signal.

It should also be pointed out that the processing of extracting the plurality of bits and the processing of calculating the modulation symbol may be performed alternately, and the specific description is the same as that in the above embodiments and is not repeated.

Optionally, sequentially extracting the plurality of bits from the plurality of sensing sequences based on the starting flag bit corresponding to each sensing sequence, may include: sorting the plurality of sensing sequences to form the sorted plurality of sensing sequences; starting from a first sensing sequence among the sorted plurality of sensing sequences, extracting a plurality of bits starting from a bit corresponding to the starting flag bit of a first sensing sequence in the first sensing sequence, until a last sensing sequence among the plurality of sensing sequences.

Starting from the first sensing sequence among the sorted plurality of sensing sequences, extracting the plurality of bits starting from the bit corresponding to the starting flag bit of the first sensing sequence in the first sensing sequence, until the last sensing sequence among the plurality of sensing sequences, may be: extracting the plurality of bits starting from a bit corresponding to the starting flag bit of the first sensing sequence in the first sensing sequence; in a case where determining that the extraction for the first sensing sequence is completed, extracting a plurality of bits starting from a bit corresponding to a starting flag bit of a second sensing sequence in the second sensing sequence, and so on, which are not repeated here.

For example, assuming that the first modulation scheme is 16QAM, two c(n) sequences (sensing sequences) are generated, respectively: c1(n) (a first sensing sequence), c2(n) (a second sensing sequence). During modulation, based on flag_start1 (a starting flag bit corresponding to the first sensing sequence), the (flag_start1)-th bit to (flag_start1+2N-1)-th bit of c1(n) are taken; based on flag_start2 (a starting flag bit corresponding to the second sensing sequence), the (flag_start2)-th bit to (flag_start2+2N-1)-th bit of c2(n) are taken, and specifically, 4 bits are taken sequentially (i.e., 4 bits are taken in the order each time) for modulation to generate 16QAM symbols, which are then mapped to corresponding time-frequency positions, thereby ensuring the number of generated symbols remains unchanged.

For example, the (flag_start1)-th bit of c1(n) is denoted as c1(F1), and the (flag_start2)-th bit of c2(n) is denoted as c2(F2), and taking a first symbol of a first resource as an example, 4 bits are taken for the first time, which are {c1(F1), c1(F1+1), c1(F1+2), c1(F1+3)}; 4 bits are taken for the N-th time, which are {c1(F1+2N-4), c1(F1+2N-3), c1(F1+2N-2), c1(F1+2N-1)}; then, the (flag_start2)-th bit to the (flag_start2+2N-1)-th bit are taken from c2(n), with 4 bits taken each time, for example, 4 bits taken sequentially are {c2(F2), c2(F2+1), c2(F2+2), c2(F2+3)}, and 4 bits taken finally are {c2(F2+2N-4), c2(F2+2N-3), c2(F2+2N-2), c2(F2+2N-1)}.

Optionally, the sequentially extracting the plurality of bits from the plurality of sensing sequences based on the starting flag bit corresponding to each sensing sequence, may include: sorting the plurality of sensing sequences to form the sorted plurality of sensing sequences; starting from a first sensing sequence among the sorted plurality of sensing sequences, sequentially extracting a plurality of bits starting from the starting flag bit corresponding to each sensing sequence, respectively, and concatenating the plurality of bits extracted from the plurality of sensing sequences respectively, to obtain a plurality of bits extracted each time.

In any one extraction processing, a certain number of bits are extracted from each sensing sequence, and then concatenated to obtain all bits to be extracted this time. In this case, the relevant description regarding the total number of the concatenated plurality of bits is similar to the above embodiments, and is not repeated here. The number of the plurality of bits extracted each time from each sensing sequence may be equal to the total number of the concatenated plurality of bits divided by the number of sensing sequences. The method of concatenating the plurality of bits extracted each time may be determined according to the order of the sensing sequences.

For example, the (flag_start1)-th bit of c1(n) is still denoted as c1(F1), and the (flag_start2)-th bit of c2(n) is denoted as c2(F2), taking a first symbol of a first resource as an example, the four bits taken for the first time are {c1(F1), c1(F1+1), c2(F2), c2(F2+1)}; the four bits taken for the (2N)-th time are {c1(F1+2N-2), c1(F1+2N-1), c2(F2+2N-2), c2(F2+2N-1)}.

In an embodiment, the one or more starting flag bits include only a plurality of starting flag bits. The one or more sensing sequences include one sensing sequence, and the plurality of starting flag bits correspond to the sensing sequence. The one sensing sequence is referred to as a first sensing sequence.

On the access network device side, the processing of generating the downlink sensing signal may include: sequentially extracting a plurality of bits from the first sensing sequence based on the plurality of starting flag bits; calculating a modulation symbol from the plurality of bits based on a first modulation scheme, and mapping the modulation symbol onto a corresponding sensing signal time-frequency resource, to obtain the downlink sensing signal. The processing of extracting the plurality of bits and the processing of calculating the modulation symbol may be performed alternately, and the specific description thereof is the same as that in the above embodiments, and is not repeated. The modulation and mapping methods are also similar to those in the above embodiments, and are not repeated.

Sequentially extracting the plurality of bits from the first sensing sequence based on the plurality of starting flag bits, may include: sorting the plurality of starting flag bits to form the sorted plurality of starting flag bits; starting from a first starting flag bit among the sorted plurality of starting flag bits, extracting the plurality of bits starting from a bit corresponding to the first starting flag bit in the first sensing sequence.

Starting from the first starting flag bit among the sorted plurality of starting flag bits, extracting the plurality of bits starting from the bit corresponding to the first starting flag bit in the first sensing sequence, may be: extracting the plurality of bits starting from the bit corresponding to the first starting flag bit in the first sensing sequence; in a case of determining that the current extraction is completed, extracting the plurality of bits starting from a bit corresponding to the second starting flag bit in the first sensing sequence, and so on, which are not repeated here.

For example, assuming the first modulation scheme is 16QAM, 2 starting flag bits flag_start1 and flag_start2, and a c(n) sequence (the first sensing sequence) are generated. During modulation, the (flag_start1)-th bit to the (flag_start1+2N-1)-th bit of c(n) are taken based on flag_start1, and then the (flag_start2)-th bit to the (flag_start2+2N-1)-th bit of c(n) are taken based on flag_start2, and specifically, 4 bits are taken sequentially (i.e., 4 bits are taken in the order each time) for modulation, to generate 16QAM symbols to map onto corresponding time-frequency positions, thereby ensuring the number of the generated symbols remains unchanged.

For example, the (flag_start1)-th bit of c(n) is denoted as c(F1), and the (flag_start2)-th bit of c(n) is denoted as c(F2), taking a first symbol of a first resource as an example, 4 bits taken for the first time are {c(F1), c(F1+1), c(F1+2), c(F1+3)}; 4 bits taken for the N-th time are {c(F1+2N-4), c(F1+2N-3), c(F1+2N-2), c(F1+2N-1)}; then, the (flag_start2)-th bit to the (flag_start2+2N-1)-th bit of c(n) are taken, with 4 bits taken each time, and for example, 4 bits taken sequentially are {c(F2), c(F2+1), c(F2+2), c(F2+3)}; and the last four bits taken are {c(F2+2N-4), c(F2+2N-3), c(F2+2N-2), c(F2+2N-1)}.

In some possible implementations, the processing by the terminal further includes: extracting a plurality of bits from the one or more sensing sequences based on the one or more starting flag bits; demodulating the echo signal of the downlink sensing signal based on the plurality of bits to obtain a sensing result.

On the terminal side, the processing of calculating the one or more starting flag bits and calculating the one or more sensing sequences may be performed before the terminal receives the echo signal of the downlink sensing signal, or may be performed after the terminal receives the echo signal of the downlink sensing signal. The processing of the terminal extracting the plurality of bits from the one or more sensing sequences based on the one or more starting flag bits may be performed before the terminal receives the echo signal of the downlink sensing signal, or may be performed after the terminal receives the echo signal of the downlink sensing signal. The processing of demodulating the echo signal of the downlink sensing signal based on the plurality of bits to obtain the sensing result, is performed after the terminal receives the echo signal of the downlink sensing signal.

For example, the terminal may calculate the one or more starting flag bits, calculate the one or more sensing sequences; and extract the plurality of bits from the one or more sensing sequences based on the one or more starting flag bits, before receiving the echo signal of the downlink sensing signal. After receiving the echo signal of the downlink sensing signal, the terminal may demodulate the echo signal of the downlink sensing signal based on the plurality of bits, to obtain the sensing result.

For example, the terminal may calculate the one or more starting flag bits and calculate the one or more sensing sequences before receiving the echo signal of the downlink sensing signal; and after receiving the echo signal of the downlink sensing signal, the terminal may extract the plurality of bits from the one or more sensing sequences based on the one or more starting flag bits, and demodulate the echo signal of the downlink sensing signal based on the plurality of bits, to obtain the sensing result.

For another example, after receiving the echo signal of the downlink sensing signal, the terminal may calculate the one or more starting flag bits, calculate the one or more sensing sequences; extract the plurality of bits from the one or more sensing sequences based on the one or more starting flag bits; and demodulate the echo signal of the downlink sensing signal based on the plurality of bits, to obtain the sensing result.

The processing of extracting the plurality of bits from the one or more sensing sequences based on the one or more starting flag bits should be the same as or correspond to the processing by the access network device, that is, it is ensured that the plurality of bits extracted by the terminal and the corresponding symbol should be the same as those of the access network device.

For example, in a case where the one or more starting flag bits include only one starting flag bit and the one or more sensing sequences include a plurality of sensing sequences, the access network device side sorts the plurality of sensing sequences to form the sorted plurality of sensing sequences; starting from a first sensing sequence among the sorted plurality of sensing sequences, for each sensing sequence, extracts a plurality of bits starting from a bit corresponding to the first starting flag bit. Correspondingly, the processing on the terminal side is the same as that on the access network device side. Moreover, the sorting method for the plurality of sensing sequences is also default for the terminal and the access network device, or is specified by a protocol; as long as the sorting methods are the same for both sides, it falls within the protection scope of this embodiment.

For another example, in a case where the one or more starting flag bits include only one starting flag bit and the one or more sensing sequences include a plurality of sensing sequences, the access network device side uses a first sensing sequence as a current sensing sequence, and extracts a plurality of bits starting from a bit position corresponding to the first starting flag bit in the current sensing sequence; in a case of determining that the extraction for the current sensing sequence is completed, uses a second sensing sequence among the sorted plurality of sensing sequences as the current sensing sequence, and extracts a plurality of bits starting from a bit position corresponding to the first starting flag bit in the current sensing sequence; in a case of determining that the extraction for the current sensing sequence is completed, uses a third sensing sequence among the sorted plurality of sensing sequences as the current sensing sequence, and extracts a plurality of bits starting from a bit position corresponding to the first starting flag bit in the current sensing sequence; and so on. Correspondingly, the processing on the terminal side is the same as that on the access network device side.

For another example, in a case where the one or more starting flag bits include only one starting flag bit and the one or more sensing sequences also include only one sensing sequence, the access network device side, when extracting a plurality of bits from the first sensing sequence for the first time, extracts the plurality of bits starting from a position corresponding to the first starting flag bit; in extraction processing other than the first time, extracts the plurality of bits starting from a next bit of an ending bit of the previous extraction, and so on. Correspondingly, the processing on the terminal side is the same as that on the access network device side.

Aforementioned cases are not exhaustively listed here; as long as the methods for extracting the plurality of bits on the terminal side and the access network device side are the same, it falls within the protection scope of this embodiment.

Furthermore, there are multiple possible processing methods for extracting the plurality of bits on the access network device side described above, as long as the terminal and the access network device default or pre-negotiate which specific processing method to use for extracting the plurality of bits, it falls within the protection scope of this embodiment.

Demodulating the echo signal of the downlink sensing signal based on the plurality of bits to obtain the sensing result, includes: calculating a modulation symbol from the plurality of bits based on a first modulation scheme; and demodulating the echo signal of the downlink sensing signal based on the modulation symbol, to obtain the sensing result.

The relevant description of the first modulation scheme is the same as that in the above embodiments, and is not repeated. The specific processing that the terminal calculates the modulation symbol from the plurality of bits based on the first modulation scheme, should also be the same as the specific processing that the access network device side calculates, by using the first modulation scheme, the modulation symbol from the plurality of bits extracted from the one or more sensing sequences based on the one or more starting flag bits, and therefore it is not repeated.

Demodulating the echo signal of the downlink sensing signal based on the modulation symbol to obtain the sensing result, may include: calculating a channel estimation value based on a modulation symbol corresponding to a first resource and the echo signal of the downlink sensing signal received on the first resource; and calculating the sensing result based on the channel estimation value. The relevant parameter in the channel estimation value includes at least one of: amplitude, frequency, phase.

Calculating the sensing result based on the channel estimation value may refer to: calculating the sensing result by using one or more algorithms according to different sensing requirements (such as different sensing types and/or different sensing services, etc.) and/or a default method. This embodiment does not limit the various possible algorithms.

The first resource may include a first time domain resource and a first frequency domain resource. The first time domain resource may be any one of a specified time instant, a certain period of time, or a time domain range in which a specified time instant t is located, etc.; the first frequency domain resource may be any one of a specified subcarrier, a subcarrier at a specified frequency f, etc. For example, assuming that the first resource is a subcarrier at time instant t and frequency f, the downlink sensing signal transmitted by the access network device on the first resource is represented as: x(t,f); and the reflected signal obtained from the downlink sensing signal through the sensing target is represented as: y(t,f). Since the terminal side calculates the modulation symbol based on the same sensing sequence and the same calculation method as the access network device, the modulation symbol on this first resource should theoretically be the same as the downlink sensing signal transmitted by the access network device on the first resource, and therefore, the modulation symbol on the first resource is also represented as: x(t,f); on the first resource, i.e., on the subcarrier at time instant t and frequency f, the terminal may calculate the CSI as $H \left(t, f\right) = \frac{y \left(t, f\right)}{x \left(t, f\right)}$, where H() represents the channel estimation value, and the CSI may include the channel estimation value. For example, CSI amplitude is used to estimate breathing rate; CSI phase variation is used to estimate breathing rate; CSI Doppler information is used to infer indoor human body motion trajectory; CSI dynamic phase change is used for gesture recognition; and human body behavior detection is performed by combining CSI amplitude and phase, etc.

After completing the above processing, the terminal may further perform the following processing: reporting the sensing result.

The terminal reporting the sensing result may include one of: the terminal reporting the sensing result to the core network device; the terminal reporting the sensing result to the access network device; the terminal reporting the sensing result to the SF; the terminal reporting the sensing result to the sensing triggering UE.

Optionally, the SF sends a sensing service request for triggering the sensing service to the core network device, and in this case, the core network device may directly send a second request for triggering sensing to the terminal. In this scenario, the terminal may directly report the sensing result of the terminal to the core network device. Correspondingly, the processing by the core network device may further include: receiving the sensing result from the terminal. After receiving the sensing result from the terminal, the core network device may further report the sensing result of the terminal and an identifier of the sensing service to the SF.

Optionally, the SF sends a sensing service request for triggering the sensing service to the core network device, and in this case, the core network device may send a first request for triggering the sensing service to the access network device, and the access network device sends a third request for triggering sensing to the terminal. If the terminal receives the third request for triggering the sensing service from the access network device, the terminal reports the sensing result to the access network device.

Correspondingly, the processing by the access network device after sending the downlink sensing signal may include: receiving the sensing result from the terminal, and reporting the sensing result of the terminal to the core network device. The processing by the core network device may include: receiving the sensing result of the terminal from the access network device. After receiving the sensing result from the terminal, the core network device may further report the sensing result of the terminal and an identifier of the sensing service to the SF.

Optionally, the SF sends a sensing service request for triggering the sensing service to the access network device, and the access network device sends a third request for triggering sensing to the terminal. If the terminal receives the third request for triggering the sensing service from the access network device, the terminal reports the sensing result to the access network device. Correspondingly, the processing by the access network device after sending the downlink sensing signal may include: receiving the sensing result from the terminal, and reporting the sensing result of the terminal to the SF.

Optionally, the sensing service may be triggered by the access network device, and in this case, the terminal may report the sensing result to the access network device.

Optionally, the sensing service may be triggered by another sensing triggering UE, and in this case, the terminal may report the sensing result to the sensing triggering UE.

Next, the communication method provided in the present disclosure is described in conjunction with multiple embodiments.

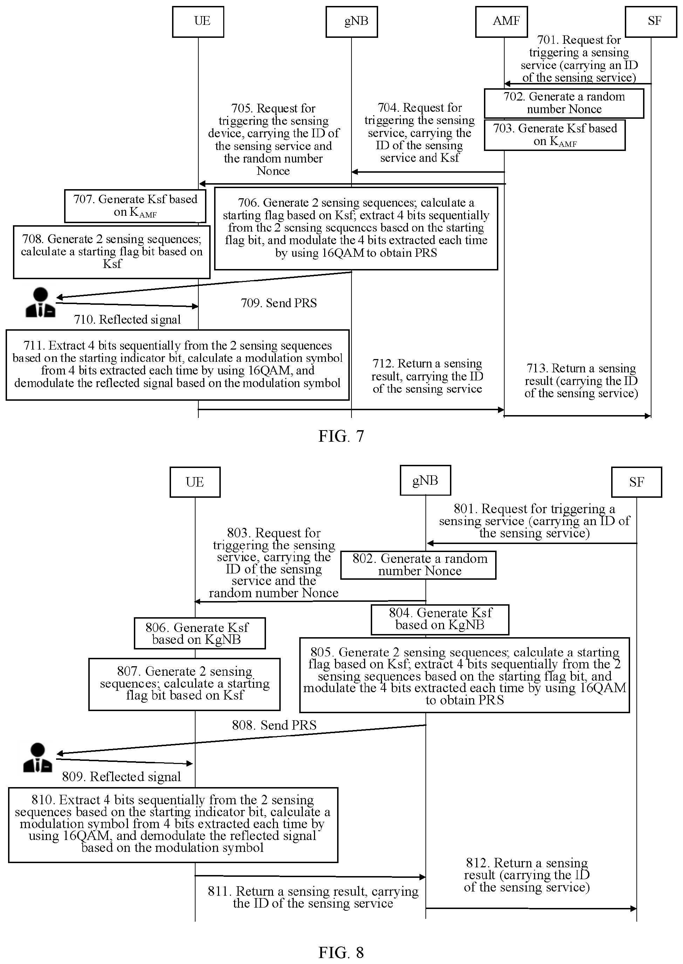

Embodiment 1: In a non-roaming scenario, the SF is in a serving PLMN, and the AMF is a sensing anchor function, and the specific solution may be combined based on the K_{AMF} key in the key architecture. This embodiment selects the NAS-related key K_{AMF} as a source of the shared key. The gNB (or sensing service-related gNB) and the UE (or sensing UE) adopt the same generation method to generate the same PRS signal. Specifically, in conjunction with FIG. 7, it includes the following steps.

In S701: the SF sends a request (simply referred to as a sensing service request) for triggering a sensing service to the AMF, the request carrying an ID of the sensing service.

It should be understood that this is only an illustrative description, and in actual processing, S701 may also be replaced by other processing.

Optionally, S701 may be replaced such that the gNB sends a request for triggering the sensing service to the AMF, the request carrying the ID of the sensing service. Correspondingly, the subsequent step S712 may be such that the UE returns a sensing result to the AMF or the gNB.

Optionally, S701 may be replaced such that the gNB sends or updates security configuration information (or configuration information) to the AMF, where the security configuration information (or configuration information) carries the ID of the sensing service. This case may occur during performing the sensing service between the current sensing UE and the base station, for example, when the generation parameter for the PRS needs to be updated, the gNB performs the processing of sending updated security configuration information to the AMF. Furthermore, the subsequent step S712 may be such that the UE returns the sensing result to the AMF or the gNB.

Optionally, S701 may be replaced such that the UE (the UE triggering the sensing service) sends a request for triggering the sensing service to the AMF, the request carrying the ID of the sensing service. Correspondingly, the subsequent step S712 may be such that the UE returns the sensing result to the AMF or the UE triggering the sensing service.

Optionally, S701 may be replaced such that the UE (the UE for triggering the sensing service) sends or updates security configuration information (or configuration information) to the AMF, where the security configuration information (or configuration information) carries the ID of the sensing service. This case may occur during performing the sensing service between the current sensing UE and the base station, for example, when the generation parameter for PRS needs to be updated, the UE for triggering the sensing service sends or updates the security configuration information to the AMF; the subsequent S712 may be such that the UE returns the sensing result to the AMF or the UE for triggering the sensing service.

Optionally, S701 may be replaced such that the SF sends or updates security configuration information (or configuration information) to the AMF, where the security configuration information (or configuration information) carries the ID of the sensing service. This case may occur during performing the sensing service between the current sensing UE and the base station, for example, when the generation parameter for PRS needs to be updated, the SF sends or updates the security configuration information (or configuration information) to the AMF.

In S702: the AMF generates a random number Nonce.

In S703: the AMF generates a shared key Ksf based on K_{AMF}. Here, the random number Nonce may be used to calculate the shared key Ksf. Since the specific processing method for calculating the shared key has been detailed in the above embodiments, it is not repeated here.

In S704: the AMF sends a request for triggering the sensing service to a sensing service-related gNB, the request carrying the ID of the sensing service and Ksf.

In S705: the AMF sends a request for triggering the sensing service to a sensing UE, the request carrying the ID of the sensing service and the random number Nonce.

In S706: the gNB generates 2 sensing sequences; calculates a starting flag bit (flag_start) based on Ksf; extracts 4 bits sequentially from the 2 sensing sequences based on the starting flag bit, and modulates the 4 bits extracted each time by using 16QAM to obtain PRS. The specific generation methods for the sensing sequence and the starting flag bit have been detailed in the above embodiments and are not repeated here. Here, S706 and S705 may be performed in no particular order, for example, S706 may be performed first and then S705, or vice versa.

In S707: the UE generates a shared key Ksf based on K_{AMF}, the generation method being consistent with that of the AMF.

In S708: the UE generates 2 sensing sequences; calculates a starting flag bit (flag_start) based on Ksf. The methods for generating the sensing sequence and calculating the starting flag bit are consistent with those of the gNB and are not repeated here.

In S709: the gNB sends a PRS sensing signal.

In S710: a sensing target reflects the PRS sensing signal, and the UE and the sensing gNB (optional, in a scenario with self-sending and self-receiving) receive the reflected signal.

In S711: the UE extracts 4 bits sequentially from the 2 sensing sequences based on the starting indicator bit, calculates a modulation symbol from 4 bits extracted each time by using 16QAM, and demodulates the reflected signal based on the modulation symbol. The specific processing method is the same as that in the above embodiments, and is not repeated.

In S712: the UE returns a sensing result, carrying the ID of the sensing service, to the AMF.

In S713: the AMF returns the sensing result (carrying the ID of the sensing service) to the SF.

Optionally, the gNB may also demodulate the reflected signal and return the sensing result to the AMF (carrying the ID of the sensing service). The gNB may directly perform demodulation based on the locally generated modulation symbol, and the specific implementation process is similar to the related demodulation processing of the UE, and is not repeated.

Optionally, in the above S704, the AMF may send a request for triggering the sensing service to the sensing service-related gNB, which may carry the ID of the sensing service, Ksf, and the random number Nonce.

In this case, the AMF does not perform S705; instead, the gNB sends a request for triggering the sensing service to the UE, the request carrying the ID of the sensing service and the random number Nonce, and as long as the timing at which the gNB sends the request for triggering the sensing service to the UE is before S707, it falls within the protection scope of this embodiment.

Furthermore, in this case, S712 performed by the UE may be replaced such that the UE returns the sensing result to the gNB, and the gNB reports the sensing result of the UE to the AMF together with the identifier of the sensing service.

Optionally, the above steps S707 and S709 may be performed in no particular order, for example, S709 may be performed before S707, that is, S709 is performed first, and the UE may perform S707 to S708 after receiving the reflected sensing signal.

Embodiment 2: In a roaming scenario, the SF is in an HPLMN (Home Public Land Mobile Network), and the AUSF is a sensing anchor function, and it may be combined based on the Kseaf key stored in the AUSF, and in this embodiment, a message between the AUSF and the UE, and a message between the AUSF and the gNB may be forwarded through the AMF, and since the AMF only has the function of forwarding messages, it is not illustrated as an example. This embodiment differs from the above Embodiment 1 only in the methods of calculating the shared key, where this embodiment is replaced by using Kseaf to calculate the shared key, and the other processing is the same as that in Embodiment 1, and therefore, the description thereof is not repeated.

It should be pointed out that Embodiment 1 and Embodiment 2 are also only exemplary descriptions, and in actual processing, the AMF or the AUSF in Embodiment 1 or Embodiment 2 may also be replaced with other core network devices, for example, may be replaced with one of AKMA, a GBA server, an AF/SF, etc.; correspondingly, the key used for calculating the sensing key in Embodiment 1 or Embodiment 2 is replaced with one of K_{AKMA}, K_{AF}, K_{Snaf}, or K_{SF}, etc., and the description thereof is not repeated here.

Embodiment 3: in a non-roaming scenario, the specific solution for calculating the shared key Ksf based on the KeNB (or KgNB) key shared between the gNB and the UE, with PDCP/UPF (Packet Data Convergence Protocol/User Plane Function) as the anchor function for the sensing service, is specifically shown in FIG. 8, including as follows.

In S801: the SF sends a request for triggering a sensing service to a sensing service-related gNB, the request carrying an ID of the sensing service. The message between the gNB and the SF may be forwarded through the UPF/AMF, and the AMF/UPF plays a role for forwarding, therefore the AMF/UPF is not illustrated in FIG. 8.

It should be understood that this is only an exemplary description, and in actual processing, S801 may also be replaced with other processing.

Optionally, step S801 may be replaced such that the UE (the UE for triggering the sensing service) sends a request for triggering the sensing service to the gNB, the request carrying the ID of the sensing service. Correspondingly, the subsequent S811 may be such that the UE (for sensing) returns a sensing result to the gNB or to the UE for triggering the sensing service.

Optionally, S801 may be replaced such that the SF sends or updates security configuration information (or configuration information) to the gNB, where the security configuration information (or configuration information) carries the ID of the sensing service. This case may occur during performing the sensing service between the current sensing UE and the gNB, for example, when the generation parameter for the PRS needs to be updated, the SF sends and updates the security configuration information to the gNB.

Optionally, S801 may be replaced such that the UE (the UE for triggering the sensing service) sends or updates security configuration information (or configuration information) to the gNB, where the security configuration information (or configuration information) carries the ID of the sensing service. This case may occur during performing the sensing service between the current sensing UE and the gNB, for example, when the generation parameter for PRS needs to be updated, the UE for triggering the sensing service sends or updates the security configuration information (or configuration information) to the gNB; the subsequent S811 may be such that the UE returns the sensing result to the gNB or the UE for triggering the sensing service.

Optionally, S801 may be replaced such that the gNB directly triggers the sensing service, for example, the gNB itself obtains the ID of the sensing service and then performs S802.

Optionally, S801 may be replaced such that during performing the sensing service between the current sensing UE and the gNB, for example, when the generation parameter for PRS needs to be updated, the gNB is triggered to perform S802.

In S802: the gNB generates a random number Nonce.

In S803: the gNB sends a request for triggering the sensing service to the UE, the request carrying the ID of the sensing service and the random number Nonce. Optionally, this message may also be sent before sending the sensing signal PRS (for example, sent at any time before step S807).

In S804: the gNB generates a shared key Ksf based on KgNB. The random number Nonce may be used in calculating Ksf, and the specific calculation method is the same as that in the above embodiments, and is not repeated.

S805 is the same as S706 in Embodiment 1, and is not repeated.

In S806: after receiving the above message, the UE generates a shared key Ksf based on KgNB. The method for the UE side to generate the shared key Ksf is consistent with that of the gNB.

S807 is the same as S708 in Embodiment 1, and is not repeated. Optionally, the UE may also perform S807 after receiving the reflected signal.

S808 to S810 are the same as S709 to S711 in Embodiment 1, and the descriptions thereof are not repeated.

In S811: the UE returns a sensing result, carrying the ID of the sensing service, to the gNB.

In S812: the gNB returns the sensing result, carrying the ID of the sensing service, to the SF. The message between the gNB and the SF may be forwarded through the UPF, and the UPF plays a role for forwarding. The UPF may also process the sensing result locally.

Optionally, the gNB may also demodulate the reflected signal and return the sensing result to the AMF (carrying the ID of the sensing service). The gNB may directly perform demodulation based on the locally generated modulation symbol, and the specific implementation process is similar to the related demodulation processing of the UE, and is not repeated.

By adopting the solutions provided in the embodiments of the present disclosure, the downlink sensing signal is generated by extracting bits from the sensing sequence based on the starting flag bit, and the starting flag bit is calculated based on a shared key of both the sending and receiving sides. In this way, the starting flag bits calculated by the shared key can hide the arrangement of the bits extracted from the sensing sequences, and for the downlink sensing signal generated in this way, only the receiving end with the same shared key can accurately measure the echo signal of the downlink sensing signal to obtain a sensing result, thereby improving the security of the downlink sensing signal itself and ensuring the security of the sensing scenario.

Furthermore, the above solutions use 16QAM or a higher-order modulation scheme to modulate the sensing sequence, thereby increasing the modulation order, and in a case of the same initial bits, the length of the generated symbols becomes shorter after increasing the modulation order, therefore, the above solutions further generates a plurality of sensing sequences, thereby adopting a higher modulation order and ensuring that the generated sequence length remains unchanged, which can increase the overall confidentiality space of the downlink sensing signal (e.g., PRS), and which, by analogy to cryptography security, can achieve or exceed 128-bit password-based security. In the original protocol, modulation mapping is performed in order starting from the 0th bit of a sensing sequence; while in the solutions provided in the present disclosure, a starting flag bit is calculated based on a key shared only by both the terminal and the access network device, and a plurality of bits are extracted from a sensing sequence starting from the starting flag bit for modulation mapping, and since only both the terminal and the access network device can calculate the same starting flag bit, the starting flag bit is confidential, and an attacker needs to traverse all possible values of c(n) to determine starting from which position the modulation mapping is performed on c(n), thereby enlarging the possibility space and ensuring the security of the downlink sensing signal.

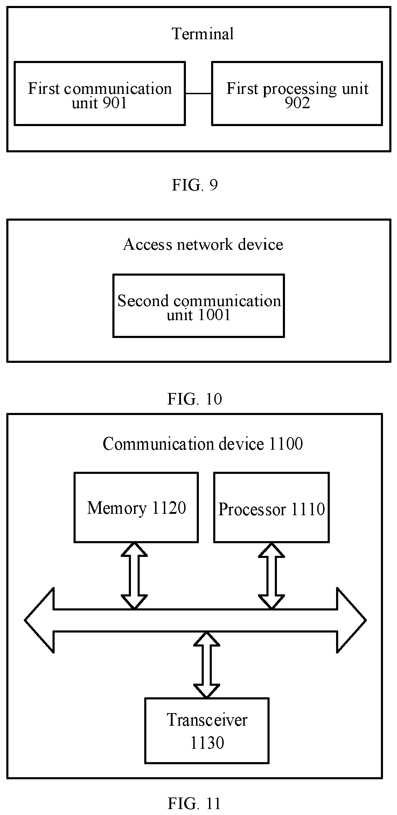

FIG. 9 is a composition structural schematic diagram of a terminal according to an embodiment of the present disclosure, including:
a first communication unit 901, configured to: receive an echo signal of a downlink sensing signal, where the downlink sensing signal is calculated based on a plurality of bits extracted from one or more sensing sequences based on one or more starting flag bits, and the one or more starting flag bits are calculated based on a shared key of the terminal and an access network device.

As shown in FIG. 9, the terminal further includes:
a first processing unit 902, configured to: extract a plurality of bits from the one or more sensing sequences based on the one or more starting flag bits; and demodulate the echo signal of the downlink sensing signal based on the plurality of bits to obtain a sensing result.

The first processing unit is configured to: calculate a modulation symbol from the plurality of bits by adopting a first modulation scheme; and demodulate the echo signal of the downlink sensing signal based on the modulation symbol to obtain the sensing result.

The first modulation scheme is quadrature amplitude modulation (QAM).

The one or more starting flag bits include a starting flag bit, and the starting flag bit corresponds to the one or more sensing sequences.

The one or more starting flag bits include a plurality of starting flag bits, and different starting flag bits among the plurality of starting flag bits are calculated based on the shared key and different offset values.

The one or more sensing sequences include a plurality of sensing sequences, and different starting flag bits among the plurality of starting flag bits correspond to different sensing sequences.

The one or more sensing sequences include a sensing sequence, and the plurality of starting flag bits correspond to the sensing sequence.

The one or more sensing sequences are generated based on one or more generation parameters, where generation parameters corresponding to different sensing sequences are different.

The generation parameters are determined based on at least one of: a configuration parameter, the shared key, one or more key truncation ranges, or one or more calculation parameters.

FIG. 10 is a composition structural schematic diagram of an access network device according to an embodiment of the present disclosure, including:
a second communication unit 1001, configured to: send a downlink sensing signal, where the downlink sensing signal is calculated based on a plurality of bits extracted from one or more sensing sequences based on one or more starting flag bits, and the one or more starting flag bits are calculated based on a shared key of a terminal and the access network device.

The downlink sensing signal is generated based on a modulation symbol, and the modulation symbol is calculated from a plurality of bits extracted from the one or more sensing sequences based on the one or more starting flag bits, by adopting a first modulation scheme.

The first modulation scheme is quadrature amplitude modulation (QAM).

The one or more starting flag bits include a starting flag bit, and the starting flag bit corresponds to the one or more sensing sequences.

The one or more starting flag bits include a plurality of starting flag bits, and different starting flag bits among the plurality of starting flag bits are calculated based on the shared key and different offset values.

The one or more sensing sequences include a plurality of sensing sequences, and different starting flag bits among the plurality of starting flag bits correspond to different sensing sequences.

The one or more sensing sequences include a sensing sequence, and the plurality of starting flag bits correspond to the sensing sequence.

The one or more sensing sequences are generated based on one or more generation parameters, where generation parameters corresponding to different sensing sequences are different.

The generation parameters are determined based on at least one of: a configuration parameter, the shared key, one or more key truncation ranges, or one or more calculation parameters.

The devices according to the embodiments of the present disclosure are capable of implementing the corresponding functions of the respective devices in the above method embodiments. For the procedure, function, implementation, and beneficial effects corresponding to each module (sub-module, unit, component, etc.) in the device, reference may be made to the corresponding description in the above method embodiments, which are not repeated here. it should be noted that functions described for each module (sub-module, unit, component, etc.) in the device according to the embodiments of the present disclosure may be implemented by different modules (sub-modules, units, components, etc.), or may be implemented by a same module (sub-module, unit, component, etc.).

FIG. 11 is a schematic structural diagram of a communication device 1100 according to the embodiments of the present disclosure. The communication device 1100 includes a processor 1110, and the processor 1110 may call and execute a computer program from a memory to enable the communication device 1100 to implement the method in the embodiments of the present disclosure.

In a possible implementation, the communication device 1100 may further include a memory 1120. The processor 1110 may call and execute a computer program from the memory 1120 to enable the communication device 1100 to implement the method in the embodiments of the present disclosure.The memory 1120 may be a separate device independent of the processor 1110, or may be integrated in the processor 1110. In a possible implementation, the communication device 1100 may further include a transceiver 1130, and the processor 1110 may control the transceiver 1130 to communicate with other devices, specifically, to send information or data to other devices, or receive information or data sent from other devices. The transceiver 1130 may include a transmitter and a receiver. The transceiver 1130 may further include an antenna, and the number of antennas may be one or more.

The embodiments of the present disclosure provides a terminal, including: a processor; and a memory in communication with the processor, where the memory is configured to store instructions, and when the instructions are executed by the processor, the instructions cause the terminal to: receive an echo signal of a downlink sensing signal, where the downlink sensing signal is calculated based on a plurality of bits extracted from one or more sensing sequences based on one or more starting flag bits, and the one or more starting flag bits are calculated based on a shared key between the terminal and an access network device.

The embodiments of the present disclosure provides an access network device, including: a processor; and a memory in communication with the processor, where the memory is configured to store instructions, and when the instructions are executed by the processor, the instructions cause the access network device to: send a downlink sensing signal, where the downlink sensing signal is calculated based on a plurality of bits extracted from one or more sensing sequences based on one or more starting flag bits, and the one or more starting flag bits are calculated based on a shared key between a terminal and the access network device.

It should be understood that, in the various embodiments of the present disclosure, the sizes of the sequence numbers of the above processes do not mean the order of execution, and the execution order of each process should be determined by its function and internal logic, and should not constitute any limitation on the implementation process of the embodiments of the present disclosure.

Those skilled in the art may clearly understand that, for the convenience and brevity of description, the specific working processes of the above-described systems, apparatuses, and units may refer to the corresponding processes in the above method embodiments, which are not repeated here.

The above is merely the DETAILED DESCRIPTION of the present disclosure, but the protection scope of the present disclosure is not limited thereto, and any skilled in the art may easily conceive of changes or substitutions within the technical scope disclosed in the present disclosure, which should be covered within the protection scope of the present disclosure. Therefore, the protection scope of the present disclosure shall be based on the protection scope of the claims.

## Claims

1. A communication method performed by a terminal, comprising:
receiving an echo signal of a downlink sensing signal, wherein the downlink sensing signal is calculated based on a plurality of bits extracted from one or more sensing sequences based on one or more starting flag bits, and the one or more starting flag bits are calculated based on a shared key of the terminal and an access network device.

2. The method according to claim 1, wherein the method further comprises:
extracting a plurality of bits from the one or more sensing sequences based on the one or more starting flag bits; and
demodulating the echo signal of the downlink sensing signal based on the plurality of bits to obtain a sensing result.

3. The method according to claim 2, wherein demodulating the echo signal of the downlink sensing signal based on the plurality of bits to obtain the sensing result, comprises:
calculating a modulation symbol from the plurality of bits by adopting a first modulation scheme; and
demodulating the echo signal of the downlink sensing signal based on the modulation symbol to obtain the sensing result.

4. The method according to claim 3, wherein the first modulation scheme is quadrature amplitude modulation (QAM).

5. The method according to any one of claims 1 to 4, wherein the one or more starting flag bits comprise a starting flag bit, and the starting flag bit corresponds to the one or more sensing sequences.

6. The method according to any one of claims 1 to 4, wherein the one or more starting flag bits comprise a plurality of starting flag bits, and different starting flag bits among the plurality of starting flag bits are calculated based on the shared key and different offset values.

7. The method according to claim 6, wherein the one or more sensing sequences comprise a plurality of sensing sequences, and different starting flag bits among the plurality of starting flag bits correspond to different sensing sequences.

8. The method according to claim 6, wherein the one or more sensing sequences comprise a sensing sequence, and the plurality of starting flag bits correspond to the sensing sequence.

9. The method according to any one of claims 1 to 8, wherein the one or more sensing sequences are generated based on one or more generation parameters, wherein generation parameters corresponding to different sensing sequences are different.

10. The method according to claim 9, wherein the generation parameters are determined based on at least one of: a configuration parameter, the shared key, one or more key truncation ranges, or one or more calculation parameters.

11. A communication method performed by an access network device, comprising:
sending a downlink sensing signal, wherein the downlink sensing signal is calculated based on a plurality of bits extracted from one or more sensing sequences based on one or more starting flag bits, and the one or more starting flag bits are calculated based on a shared key of a terminal and the access network device.

12. The method according to claim 11, wherein the downlink sensing signal is generated based on a modulation symbol, and the modulation symbol is calculated from a plurality of bits extracted from the one or more sensing sequences based on the one or more starting flag bits, by adopting a first modulation scheme.

13. The method according to claim 12, wherein the first modulation scheme is quadrature amplitude modulation (QAM).

14. The method according to any one of claims 11 to 13, wherein the one or more starting flag bits comprise a starting flag bit, and the starting flag bit corresponds to the one or more sensing sequences.

15. The method according to any one of claims 11 to 13, wherein the one or more starting flag bits comprise a plurality of starting flag bits, and different starting flag bits among the plurality of starting flag bits are calculated based on the shared key and different offset values.

16. The method according to claim 15, wherein the one or more sensing sequences comprise a plurality of sensing sequences, and different starting flag bits among the plurality of starting flag bits correspond to different sensing sequences.

17. The method according to claim 15, wherein the one or more sensing sequences comprise a sensing sequence, and the plurality of starting flag bits correspond to the sensing sequence.

18. The method according to any one of claims 11 to 17, wherein the one or more sensing sequences are generated based on one or more generation parameters, wherein generation parameters corresponding to different sensing sequences are different.

19. The method according to claim 18, wherein the generation parameters are determined based on at least one of: a configuration parameter, the shared key, one or more key truncation ranges, or one or more calculation parameters.

20. A terminal, comprising:
a first communication unit, configured to receive an echo signal of a downlink sensing signal, wherein the downlink sensing signal is calculated based on a plurality of bits extracted from one or more sensing sequences based on one or more starting flag bits, and the one or more starting flag bits are calculated based on a shared key of the terminal and an access network device.

21. The terminal according to claim 20, wherein the terminal further comprises:
a first processing unit, configured to: extract a plurality of bits from the one or more sensing sequences based on the one or more starting flag bits; and demodulate the echo signal of the downlink sensing signal based on the plurality of bits to obtain a sensing result.

22. The terminal according to claim 21, wherein the first processing unit is configured to: calculate a modulation symbol from the plurality of bits by adopting a first modulation scheme; and demodulate the echo signal of the downlink sensing signal based on the modulation symbol to obtain the sensing result.

23. The terminal according to claim 22, wherein the first modulation scheme is quadrature amplitude modulation (QAM).

24. The terminal according to any one of claims 20 to 23, wherein the one or more starting flag bits comprise a starting flag bit, and the starting flag bit corresponds to the one or more sensing sequences.

25. The terminal according to any one of claims 20 to 23, wherein the one or more starting flag bits comprise a plurality of starting flag bits, and different starting flag bits among the plurality of starting flag bits are calculated based on the shared key and different offset values.

26. The terminal according to claim 25, wherein the one or more sensing sequences comprise a plurality of sensing sequences, and different starting flag bits among the plurality of starting flag bits correspond to different sensing sequences.

27. The terminal according to claim 25, wherein the one or more sensing sequences comprise a sensing sequence, and the plurality of starting flag bits correspond to the sensing sequence.

28. The terminal according to any one of claims 20 to 27, wherein the one or more sensing sequences are generated based on one or more generation parameters, wherein generation parameters corresponding to different sensing sequences are different.

29. The terminal according to claim 28, wherein the generation parameters are determined based on at least one of: a configuration parameter, the shared key, one or more key truncation ranges, or one or more calculation parameters.

30. An access network device, comprising:
a second communication unit, configured to send a downlink sensing signal, wherein the downlink sensing signal is calculated based on a plurality of bits extracted from one or more sensing sequences based on one or more starting flag bits, and the one or more starting flag bits are calculated based on a shared key of a terminal and the access network device.

31. The access network device according to claim 30, wherein the downlink sensing signal is generated based on a modulation symbol, and the modulation symbol is calculated from a plurality of bits extracted from the one or more sensing sequences based on the one or more starting flag bits, by adopting a first modulation scheme.

32. The access network device according to claim 31, wherein the first modulation scheme is quadrature amplitude modulation (QAM).

33. The access network device according to any one of claims 30 to 32, wherein the one or more starting flag bits comprise a starting flag bit, and the starting flag bit corresponds to the one or more sensing sequences.

34. The access network device according to any one of claims 30 to 32, wherein the one or more starting flag bits comprise a plurality of starting flag bits, and different starting flag bits among the plurality of starting flag bits are calculated based on the shared key and different offset values.

35. The access network device according to claim 34, wherein the one or more sensing sequences comprise a plurality of sensing sequences, and different starting flag bits among the plurality of starting flag bits correspond to different sensing sequences.

36. The access network device according to claim 34, wherein the one or more sensing sequences comprise a sensing sequence, and the plurality of starting flag bits correspond to the sensing sequence.

37. The access network device according to any one of claims 30 to 36, wherein the one or more sensing sequences are generated based on one or more generation parameters, wherein generation parameters corresponding to different sensing sequences are different.

38. The access network device according to claim 37, wherein the generation parameters are determined based on at least one of: a configuration parameter, the shared key, one or more key truncation ranges, or one or more calculation parameters.
